Europäisches Patentamt

(19) European Patent Office

Office européen des brevets

(11) Publication number: **0 175 368**
**B1**

(12) **EUROPEAN PATENT SPECIFICATION**

(45) Date of publication of patent specification: **24.02.88**

(51) Int. Cl.⁴: **B 23 P 11/00**

(21) Application number: **85111870.3**

(22) Date of filing: **19.09.85**

(54) **Caulking claw structure.**

(30) Priority: **21.09.84 JP 142224/84**

(43) Date of publication of application:
**26.03.86 Bulletin 86/13**

(45) Publication of the grant of the patent:
**24.02.88 Bulletin 88/08**

(84) Designated Contracting States:
**DE FR GB IT**

(56) References cited:
**DE-C- 939 082**
**US-A-1 203 669**
**US-A-2 132 693**
**US-A-2 356 422**
**US-A-2 532 020**

(73) Proprietor: **TOYOTA JIDOSHA KABUSHIKI
KAISHA
1, Toyota-cho Toyota-shi
Aichi-ken 471 (JP)**

(72) Inventor: **Shiratori, Masatake
2-56, Ekakusinmachi
Toyota-shi Aichi-ken (JP)**
Inventor: **Kobayashi, Toshiyuki
2-56, Ekakusinmachi
Toyota-shi Aichi-ken (JP)**

(74) Representative: **Tiedtke, Harro, Dipl.-Ing. et al
Patentanwaltsbüro Tiedtke-Bühling-Kinne-
Grupe-Pellmann-Grams-Struif Bavariaring 4
Postfach 20 24 03
D-8000 München 2 (DE)**

Courier Press, Leamington Spa, England.

## Description

### FIELD OF THE INVENTION

The techniques disclosed in this specification belong to the field of a caulking claw structure used to mount a part on a desired portion of a substrate.

### DESCRIPTION OF THE PRIOR ART

In general, in order to mount a part on a parent material, such as a plate material used to secure a part of an automobile to an automobile body, various part-mounting modes using caulking means, clipping means and screwing means, especially, a part-mounting mode using caulking means, which enable a part to be mounted conveniently on and fixed comparatively firmly to a substrate, is employed frequently.

Among the part-mounting modes using caulking means, a part-mounting mode in which the caulking claws formed on a part are bent and fixed to a parent material through bores formed therein or via the edges thereof, to thereby mount the part on the parent material enables a part-mounting operation to be carried out easily at a low cost. Owing to these merits, this part-mounting mode is used in a very large number of places.

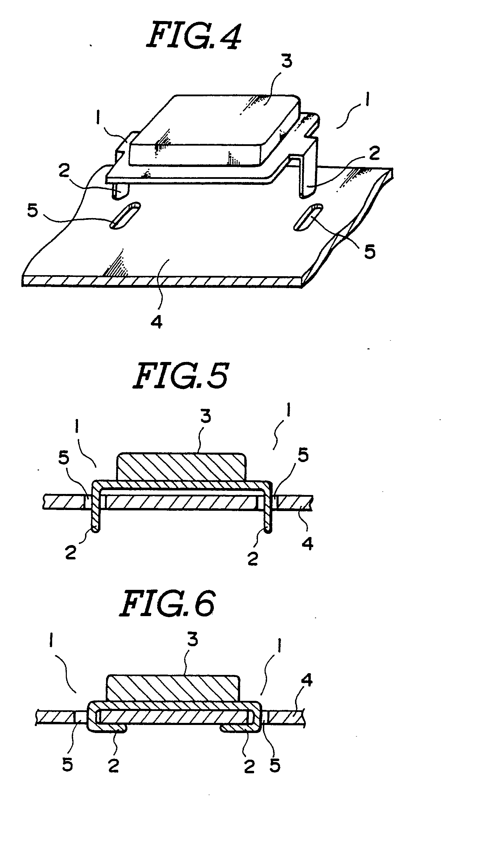

As shown in Figs. 4—6, the caulking claws 1, which have theretofore been widely used, are formed generally in the shape of the letter "L", and have free end portions 2 formed so as to extend from the outer edges of a bottom portion of a part 3 to be mounted, toward a parent material. The free end portions 2 are inserted into bores 5, which are provided in predetermined portions of the parent material, a substrate 4, and then bent from the lower side of the substrate 4 by using a jig (not shown), to thereby fix the part 3 to the substrate 4.

The above-described conventional caulking claws are capable of fixing a part to a substrate comparatively easily and firmly. However, when the substrate does not have on its rear side a space large enough to insert a jig thereinto, or, when the substrate has the so-called bag-like construction in which a closed space is formed on the rear side thereof, the claws cannot be bent and fixed to the substrate from the rear side thereof. In such cases, the claws cannot be used, and there is no choice but to employ a welding means, screws, or some other means. Therefore, these caulking claws cannot be widely used.

Even when a substrate to which a jig can be applied is used, bending the caulking claws so as to fix a part to the substrate must be done from the rear side of the substrate. Consequently, the part-mounting operation becomes troublesome.

### SUMMARY OF THE INVENTION

An object of the device in this application, in which the technical problems to be solved thereby reside in the faults of the above-described caulking claw structure made on the basis of the conventional techniques, is to provide an excellent caulking claw structure, which enables a part to be mounted easily on even a substrate having no sufficiently large space on the rear side thereof, and on even a portion of a bag-like construction of a substrate, and the efficiency of a part-mounting operation to be improved, and which contributes much to the manufacturing industrial field in which the part-mounting techniques are utilized.

### BRIEF DESCRIPTION OF THE DRAWINGS

Fig. 1 is a perspective view of a embodiment of the device;

Fig. 2 is a sectional view of the Fig. 1;

Fig. 3 is another sectional view of the embodiment of the device;

Fig. 4 is a perspective view of a conventional device of this kind;

Fig. 5 is a sectional view of the Fig. 4;

Fig. 6 is a another sectional view of conventional device of this kind.

### DETAILED DESCRIPTION OF THE PREFERRED EMBODIMENT

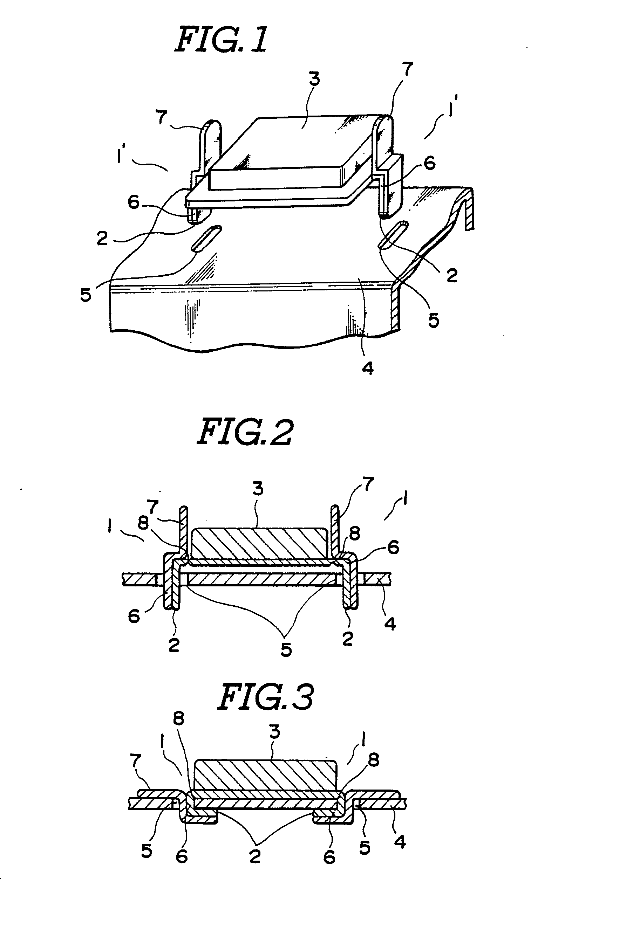

An embodiment of this device will now be described on the basis of Figs. 1—3.

The embodiment will be described by using the same reference numerals as in Figs. 4—6 which illustrate a conventional mode of a device of this kind, with respect to the parts of the embodiment which are identical with those of this conventional device.

Reference numeral 1' denotes caulking claws in the device in the present application, each of which consists of an L-shaped claw portion 6 extending from a predetermined portion of an outer periphery of a bottom section of a part 3 to be mounted, and a lever 7 composed of a plate material and bent so as to form one stepped portion. A free end part 2 of the L-shaped claw portion 6 is extended downward so that the free end part 2 can be inserted through a bore 5 made in a substrate 4, a parent material. A recess 8 is formed in a base section of each claw portion 6. Each of the levers 7 is spot-welded to the relative L-shaped claw portion 6 with one end portion of the lever 7 extending opposite to the relative L-shaped claw portion 6.

In the device of the above-mentioned construction, when the levers 7, which are provided firmly on the L-shaped claw portion 6, are turned outward with respect to the part 3 to be mounted, after the free end parts 2 of the caulking claws 1', which are formed at the outer peripheries of the part 3, have been inserted into the bores 5, which are formed in the substrate 4, the L-shaped claw portions 6, which extend through the bores 5 in the substrate 4, are turned inward about the recesses 8, so that the part 3 engages and is set firmly on the substrate 4.

The mode of practicing this device is not, of course, limited to that of practicing the above-described embodiment. For example, the thickness of the levers 7 may be increased instead of providing the recesses 8 in the base sections of the L-shaped claw portions 6, to enable the claw portions 6 to be bent easily, or the L-shaped claw portions 6 may be covered with layers of vinyl chloride to prevent the occurrence of abnormal sound. Various modes of embodiment including those of the above examples can be employed.

Using this device, a part may be mounted on a substrate reliably even when the substrate as a parent material does not basically have on its lower side a space large enough to insert a jig thereinto, and even when the substrate has a so-called bag-like construction in which a closed space is formed at the lower side thereof. Moreover, mounting the part of the substrate by using this device can be done easily by anybody, and enables the efficiency of a part-mounting operation to be improved.

This device is formed by providing the base portions of conventional caulking claws with levers extending opposite to the claws, and can be caulked by merely turning the levers. Therefore, it becomes unnecessary to bend the claws from the rear side of the substrate, and a simple part-mounting operation using a caulking structure can be applied to a larger number of types of parts. This enables the degree of freedom of part-mounting operations in the manufacturing industry to increase.

Since the levers are formed with a part unitarily in advance by a means, such as a spot-welding means, they are not lost during the part-mounting operation, and no troublesome operations, such as an operation for controlling the levers with respect to the relative claws are required.

## Claims

1. A caulking claw structure suitable for being provided at a bottom portion of a part to be mounted, said caulking claw structure having claws (6) adapted to be inserted into bores, which are provided in a substrate, and then bent and fixed to said substrate, characterized in that said caulking claw structure is provided at base portions of its claws (6) with levers (7) which extend in the opposite direction to said claws (6).

2. A caulking claw structure according to claim 1, wherein said levers (7) are provided in the shape of cranks.

3. A caulking claw structure according to claim 1, wherein said caulking claw structure is provided at base portions of its claws (6) with recesses (8).

4. A caulking claw structure according to claim 1, wherein the thickness of the portions of said levers (7) corresponding to the base portions of said claws (6) is increased.

5. A caulking claw structure according to claim 1, wherein the claws (6) are covered with layers of vinyl chloride.

## Patentansprüche

1. Nietlaschenausbildung, die zur Anbringung an einem Bodenabschnitt eines zu montierenden Teils geeignet ist und die Haken (6) aufweist, die in Bohrungen, die in einem Substrat ausgebildet sind, eingeführt werden können und die danach gebogen und an dem Substrat befestigt werden, dadurch gekennzeichnet, daß die Nietlaschenausbildung an Grundabschnitten ihrer Haken (6) mit Hebeln (7) versehen ist, die sich in der zu den Haken (6) entgegengesetzten Richtung erstrekken.

2. Nietlaschenausbildung nach Anspruch 1, bei der die Hebel (7) die Gestalt von Kurbeln aufweisen.

3. Nietlaschenausbildung nach Anspruch 1, die an den Grundabschnitten ihrer Haken (6) mit Ausnehmungen (8) versehen ist.

4. Nietlaschenausbildung nach Anspruch 1, bei der die Dicke der Abschnitte der Hebel (7) entsprechend den Grundabschnitten der Haken (6) vergrößert ist.

5. Nietlaschenausbildung nach Anspruch 1, bei der die Haken (6) mit Schichten aus Vinylchlorid bedeckt sind.

## Revendications

1. Une structure de languettes de fixation propre à être disposée au fond d'une pièce à monter, comportant des languettes (6) susceptibles d'être introduites dans des passages ménagés dans un substrat de support et d'être ensuite repliées et fixées sur ledit substrat, caractérisée en ce qu'elle comporte, sur les parties de base desdites languettes (6), des leviers (7) s'étendant dans la direction opposée à celle desdites languettes (6).

2. Une structure de languettes de fixation selon la revendication 1, dans laquelle lesdits leviers (7) présentent une configuration coudée.

3. Une structure de languettes de fixation selon la revendication 1, dans laquelle les parties de base desdites languettes (6) présentent des évidements (8).

4. Une structure de languettes de fixation selon la revendication 1, dans laquelle les parties desdits leviers (7) qui correspondent auxdites parties de base desdites languettes (6) présentent une épaisseur accrue.

5. Une structure de languettes de fixation selon la revendication 1, dans laquelle lesdits languettes (6) sont revêtues de couches de chlorure de vinyle.

## FIG.1

## FIG.2

## FIG.3

1

*FIG.4*

*FIG.5*

*FIG.6*